# EUROPEAN PATENT APPLICATION

(11) **EP 2 614 934 A2**
(43) Date of publication of application: **17.07.2013**
(21) Application number: 12173582.3
(22) Date of filing: 26.06.2012
(51) Int. Cl.: B25J 9/16

(54) **Processing apparatus and processing method**

(30) Priority: 16.01.2012 JP 2012006538
(71) Applicant: Kabushiki Kaisha Yaskawa Denki, Kitakyushu-Shi Fukuoka 806 (JP)
(72) Inventor: Shimono, Toshiaki, Kitakyushu-shi, Fukuoka 806-0004 (JP)
(74) Representative: Viering, Jentschura & Partner

(57) **Abstract**

This processing apparatus (100) includes a tool (34, 64, 134) processing a protruding portion of a sheet member (302, 304) covering a base substrate (301) protruding from the base substrate and a control portion (41) mechanically or electrically detecting a position where the tool comes into contact with the base substrate and acquiring a processing position based on the position where the tool comes into contact with the base substrate.

## Description

### BACKGROUND OF THE INVENTION

### Field of the Invention

The present invention relates to a processing apparatus and a processing method.

### Description of the Background Art

A processing apparatus (sheet cutting apparatus) including a tool processing a protruding portion is known in general.

Japanese Patent Laying-Open No. 2007-288010 discloses a sheet cutting apparatus including a robot having a robot arm, a chuck mounted on a forward end of the robot arm, a cutter blade held by the chuck, and an imaging camera mounted on the chuck. This sheet cutting apparatus is configured to cut a protruding portion of a sheet applied to protrude from a semiconductor wafer along the outer periphery of the semiconductor wafer by the cutter blade. In this sheet cutting apparatus, a position to cut (process) the protruding portion by the cutter blade is determined on the basis of image data of the cutter blade, the sheet, and the semiconductor wafer imaged by the imaging camera.

However, in the sheet cutting apparatus described in the aforementioned Japanese Patent Laying-Open No. 2007-288010, the position to process the protruding portion is determined on the basis of the image data imaged by the imaging camera, whereby it may be difficult to accurately image the position (outer periphery) of the semiconductor wafer if ambient light is incident upon an imaging region. Consequently, it may be difficult to accurately acquire the position to process the protruding portion.

### SUMMARY OF THE INVENTION

The present invention has been proposed in order to solve the aforementioned problem, and an object of the present invention is to provide a processing apparatus and a processing method each capable of accurately acquiring a processing position.

In order to attain the aforementioned object, a processing apparatus according to a first aspect includes a tool processing a protruding portion of a sheet member covering a base substrate protruding from the base substrate and a control portion mechanically or electrically detecting a position where the tool comes into contact with the base substrate and acquiring a processing position based on the position where the tool comes into contact with the base substrate.

As hereinabove described, the processing apparatus according to the first aspect includes the control portion mechanically or electrically detecting the position where the tool comes into contact with the base substrate and acquiring the processing position based on the position where the tool comes into contact with the base substrate. Thus, the position where the tool comes into contact with the base substrate is detected without the influence of ambient light so that the processing position can be accurately acquired, dissimilarly to a case where the position of the base substrate is detected on the basis of image data imaged by an imaging camera.

A processing method according to a second aspect is a processing method for processing a protruding portion of a sheet member covering a base substrate protruding from the base substrate along a processing position by a tool, and includes mechanically or electrically detecting a position where the tool comes into contact with the base substrate; and acquiring the processing position based on the position where the tool comes into contact with the base substrate.

As hereinabove described, the processing method according to the second aspect includes acquiring the processing position based on the position where the tool comes into contact with the base substrate. Thus, the position where the tool comes into contact with the base substrate is detected without the influence of ambient light so that the processing method capable of accurately acquiring the processing position can be provided, dissimilarly to a case where the position of the base substrate is detected on the basis of image data imaged by an imaging camera.

According to the aforementioned structure, the processing position can be accurately acquired.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a side elevational view of a robot according to a first embodiment;
Fig. 2 is a top plan view of the robot according to the first embodiment;
Fig. 3 is a perspective view of the robot according to the first embodiment;
Fig. 4 is an exploded perspective view of a substrate trimmed by the robot according to the first embodiment;
Fig. 5 is a sectional view of the substrate trimmed by the robot according to the first embodiment;
Fig. 6 is a side elevational view of an end effector of the robot according to the first embodiment;
Fig. 7 is a diagram showing a state where a heat cutter blade of the end effector of the robot according to the first embodiment comes into contact with a glass substrate;
Fig. 8 is a front elevational view of the heat cutter blade of the robot according to the first embodiment;
Fig. 9 is a block diagram of the robot according to the first embodiment;
Fig. 10 is a flowchart for illustrating the operation of the robot according to the first embodiment to acquire a trimming position;
Fig. 11 is a top plan view for illustrating the operation of the robot according to the first embodiment to acquire the trimming position;
Fig. 12 is a flowchart for illustrating the trimming operation of the robot according to the first embodiment;
Fig. 13 is a top plan view for illustrating the cutting operation of the robot according to the first embodiment;
Fig. 14 is a top plan view for illustrating the trimming operation of the robot according to the first embodiment;
Fig. 15 is a perspective view showing the trimming operation of the heat cutter blade of the robot according to the first embodiment;
Fig. 16 is a top plan view showing the trimming operation of the heat cutter blade of the robot according to the first embodiment;
Fig. 17 is a side elevational view of an end effector of a robot according to a second embodiment;
Fig. 18 is a front elevational view of a heat cutter blade of the robot according to the second embodiment;
Fig. 19 is a perspective view showing a processing apparatus according to a modification of each of the first and second embodiments; and
Fig. 20 is an enlarged view of a heat cutter blade according to another modification of the first embodiment.

### DESCRIPTION OF THE EMBODIMENTS

Embodiments are now described with reference to the drawings.

### (First Embodiment)

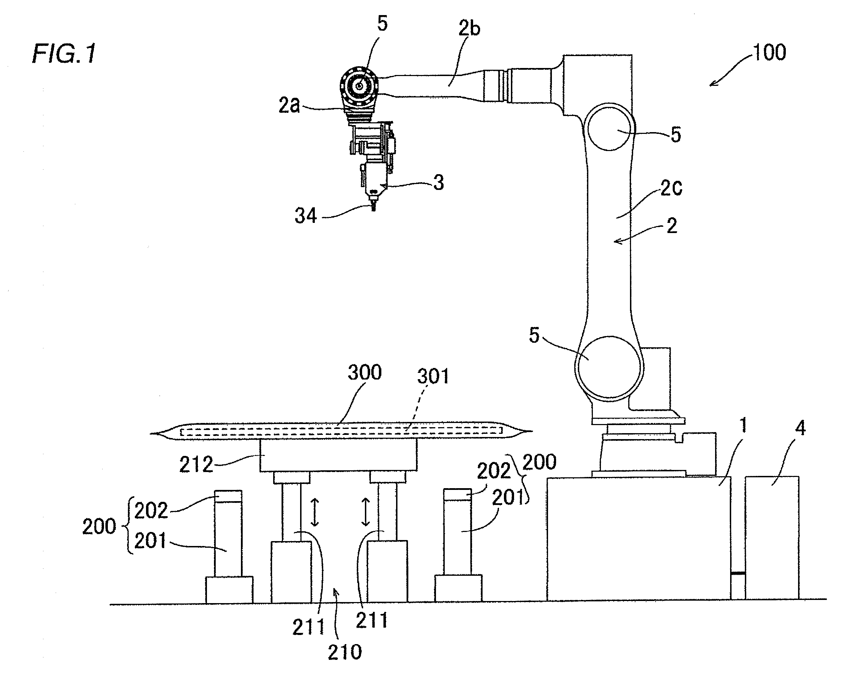

First, the structure of a robot 100 according to a first embodiment is described with reference to Figs. 1 to 9. The robot 100 is an example of the "processing apparatus". In other words, a robot may include not only an articulated robot shown in Fig. 1 but also a SCARA robot and a Cartesian robot, and furthermore a processing tool may be arranged on a stage where at least three axes are orthogonal to each other.

As shown in Figs. 1 to 3, the robot 100 includes a base 1, a robot arm 2 mounted on the base 1, an end effector 3 mounted on the forward end of the robot arm 2, and a robot controller 4 controlling the overall operation of the robot 100. A conveyor 200 to convey a substrate 300 and a placement portion 210 to place the substrate 300 when trimming is performed are arranged adjacent to the robot 100.

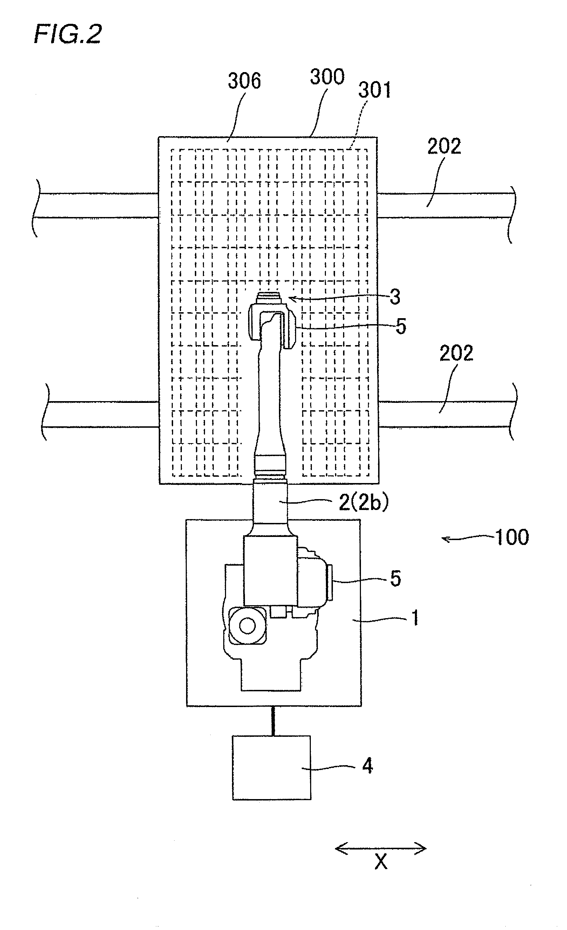

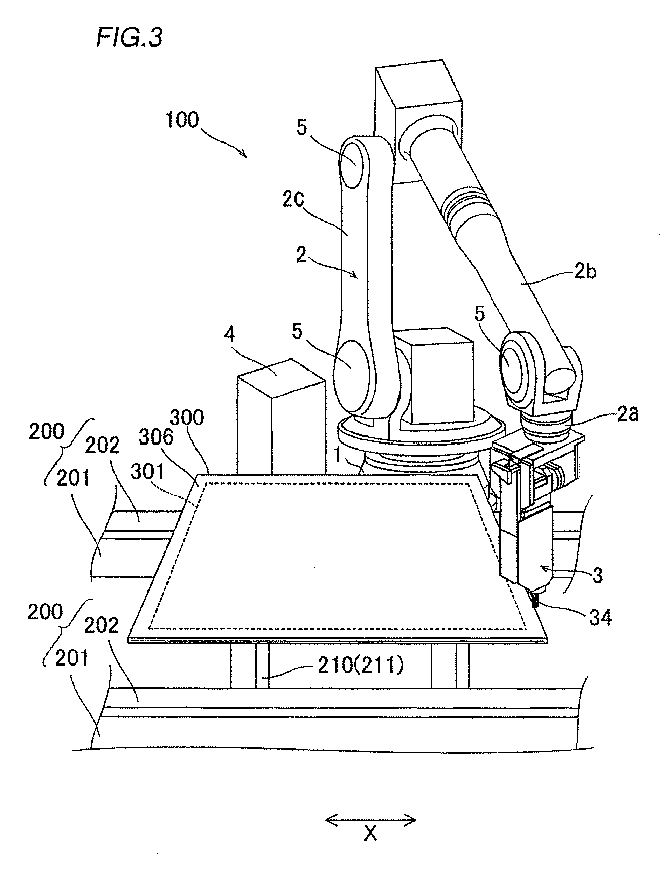

The conveyor 200 includes pedestals 201 and roller portions 202 arranged on the pedestals 201 to move the substrate 300. As shown in Figs. 2 and 3, two rows of roller portions 202 are provided to extend along a direction (direction X) in which the substrate 300 is conveyed. The roller portions 202 are examples of the "conveying portion". As shown in Fig. 1, the placement portion 210 is arranged between the two rows of roller portions 202. The placement portion 210 includes elevation portions 211 going up and down to allow the substrate 300 to move up and down and a placement stand 212 to place the substrate 300. When a protruding portion 306 of the substrate 300 described later is trimmed, the elevation portions 211 go up to place the substrate 300 on the placement stand 212 and separate the substrate 300 from the roller portions 202 (see Fig. 1). When the substrate 300 is moved, the elevation portions 211 go down to separate the substrate 300 from the placement stand 212 and place the substrate 300 on the two rows of roller portions 202.

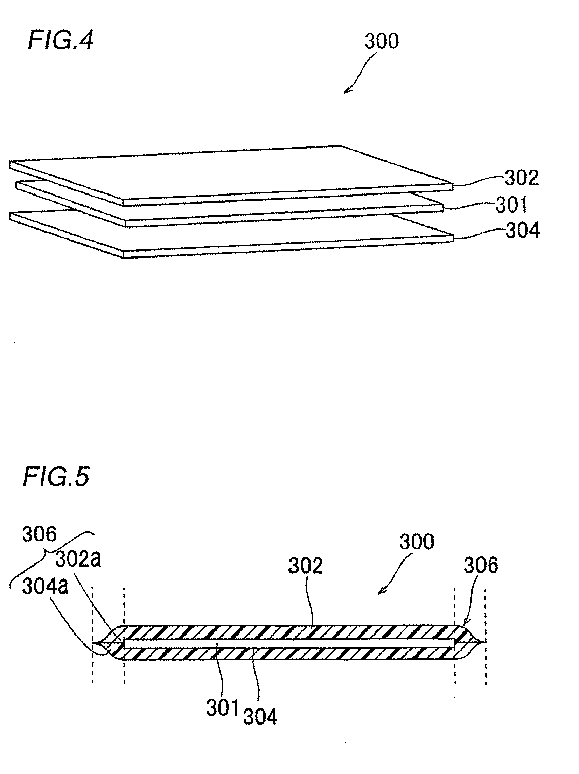

As shown in Fig. 4, the substrate 300 is constituted by a glass substrate 301, a first adhesive sheet 302 arranged over the glass substrate 301, and a second adhesive sheet 304 arranged under the glass substrate 301. The first adhesive sheet 302 and the second adhesive sheet 304 are made of EVA (ethylene-vinyl acetate), for example. The glass substrate 301, the first adhesive sheet 302, and the second adhesive sheet 304 are rectangularly formed in plan view. The glass substrate 301 is an example of the "base substrate". The first adhesive sheet 302 and the second adhesive sheet 304 are examples of the "sheet member".

The first adhesive sheet 302 and the second adhesive sheet 304 are formed to be larger than the glass substrate 301. As shown in Fig. 5, the first adhesive sheet 302 and the second adhesive sheet 304 are arranged to protrude outward from the four sides of the glass substrate 301 in a state where the first adhesive sheet 302 and the second adhesive sheet 304 are placed on the glass substrate 301 and are laminated.

As shown in Fig. 1, the robot 100 is a vertical articulated robot having 6 degrees of freedom, for example, including the robot arm 2 constituted by three arm portions 2a, 2b, and 2c. Servomotors (not shown) to drive the arm portions 2a, 2b, and 2c are built in joints 5 connecting the three arm portions 2a, 2b, and 2c. The robot controller 4 drives and controls these servomotors to operate the arm portions 2a, 2b, and 2c. The robot 100 is an example of the "articulated robot".

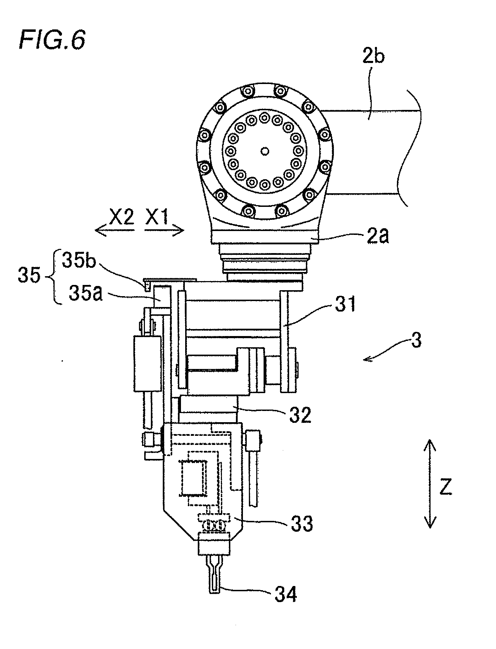

As shown in Fig. 6, the end effector 3 is mounted on the forward end of the arm portion 2a. The end effector 3 includes an arm mounting portion 31, an air slide table 32, a heat cutter body 33, and a heat cutter blade 34. The arm mounting portion 31 is fixedly mounted on the arm portion 2a and arranged above the air slide table 32. The heat cutter body 33 is arranged below the air slide table 32. The heat cutter blade 34 is mounted on the forward end of the heat cutter body 33 along a vertical direction (direction Z). The heat cutter blade 34 is an example of the "tool".

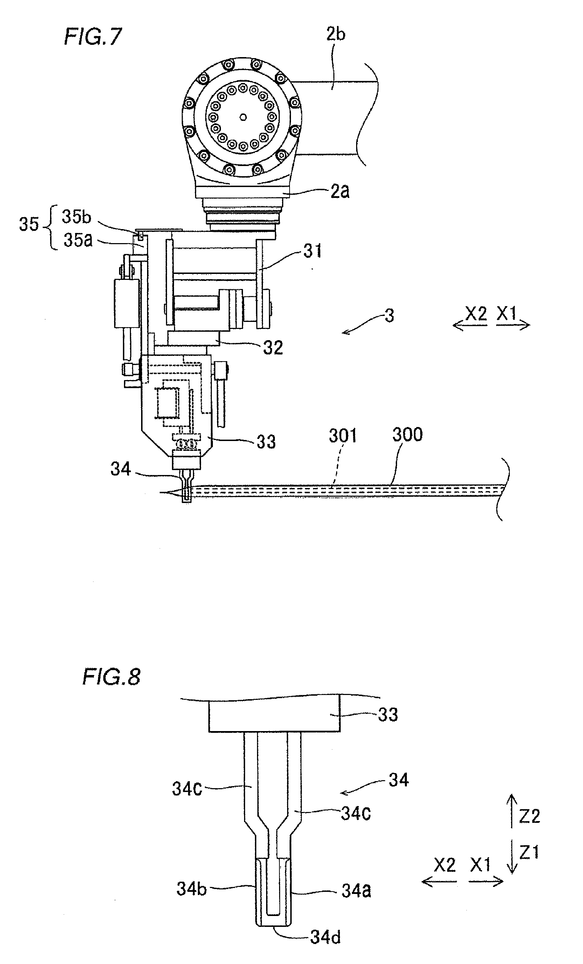

According to the first embodiment, a contact detection portion 35 electrically detecting that the heat cutter blade 34 comes into contact with the glass substrate 301 of the substrate 300 is mounted on the arm mounting portion 31 of the end effector 3. The contact detection portion 35 includes a plate-like detection section 35a and an optical sensor 35b detecting that light is blocked by the detection section 35a. Specifically, the heat cutter blade 34 comes into contact with the glass substrate 301 of the substrate 300 so that the heat cutter blade 34 (heat cutter body 33) stops when the end effector 3 moves along arrow X1, as shown in Fig. 7. At this time, the arm portion 2a (arm mounting portion 31) arranged above the air slide table 32 moves along arrow X1 with respect to the heat cutter blade 34 (heat cutter body 33) arranged below the air slide table 32. Thus, the detection section 35a of the contact detection portion 35 is put in the optical sensor 35b so that light in the optical sensor 35b is blocked. Consequently, a control portion 41 of the robot controller 4 described later detects that the heat cutter blade 34 comes into contact with the glass substrate 301 of the substrate 300.

As shown in Fig. 8, the heat cutter blade 34 is substantially U-shaped in plan view, and both of an end portion 34a of the substantially U-shaped heat cutter blade 34 on one side (along arrow X1) and an end portion 34b of the substantially U-shaped heat cutter blade 34 on another side (along arrow X2) are configured to be capable of cutting the protruding portion 306 of the first adhesive sheet 302 and the second adhesive sheet 304 covering the glass substrate 301 of the substrate 300 (a protruding portion 302a of the first adhesive sheet 302 and a protruding portion 304a of the second adhesive sheet 304, see Fig. 5) protruding outward from the side surfaces of the glass substrate 301. Specifically, portions 34c of the heat cutter blade 34 on the side of the heat cutter body 33 are made of copper alloy, for example, in the form of a bar. Two portions 34c are provided, and so bent that an interval between the two portions 34c is decreased toward the tips (along arrow Z1) thereof. A portion 34d on the tip of the heat cutter blade 34 is U-shaped. The portion 34d of the heat cutter blade 34 is made of Nichrome, for example, and can generate heat at a temperature of at least about 400°C and not more than about 500°C. The portion 34d of the heat cutter blade 34 is so configured that the thickness thereof is gradually decreased outward (along arrow X1 and arrow X2). The end portion 34a or end portion 34b of the portion 34d of the heat cutter blade 34 comes into contact with the first adhesive sheet 302 and the second adhesive sheet 304 so that the protruding portion 306 of the first adhesive sheet 302 and the second adhesive sheet 304 protruding from the glass substrate 301 is cut by the heat (at least about 400°C and not more than about 500°C) and shape of the portion 34d of the heat cutter blade 34.

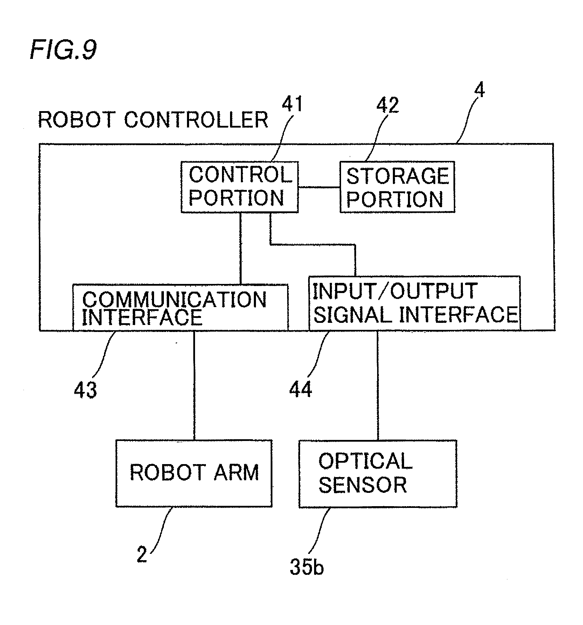

As shown in Fig. 9, the robot controller 4 includes the control portion 41, a storage portion 42, a communication interface 43, and an input/output signal interface 44. The storage portion 42 is connected to the control portion 41. The communication interface 43 is connected to the control portion 41, and connected to the robot arm 2 through a servo drive (not shown). The input/output signal interface 44 is connected to the control portion 41, and connected to the optical sensor 35b of the contact detection portion 35 mounted on the end effector 3.

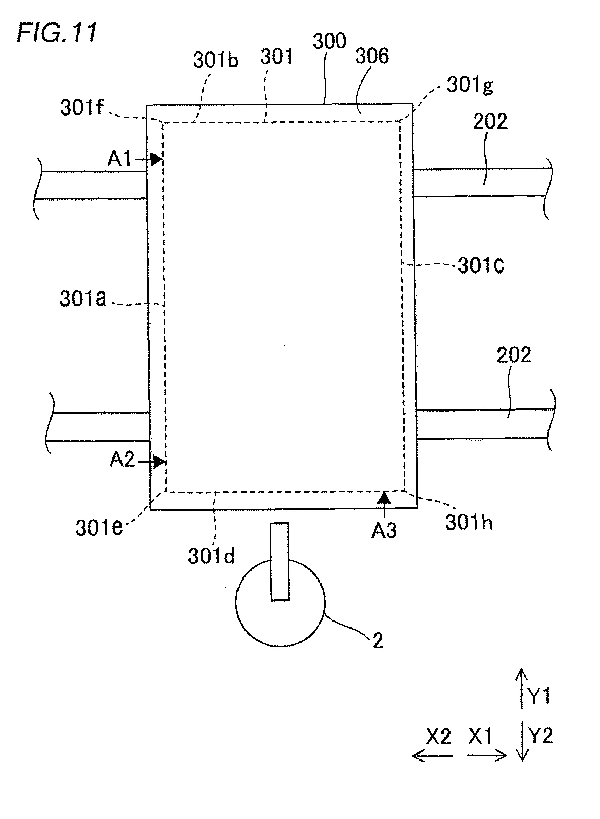

The storage portion 42 is configured to store the operation of the robot 100 previously taught. More specifically, the storage portion 42 previously stores an operation for bringing the heat cutter blade 34 into contact with three points in total on the two sides (sides 301a and 301d, see Fig. 11) of the glass substrate 301 of the rectangular substrate 300. The storage portion 42 also stores the dimension (widths in directions X and Y etc.) of the glass substrate 301.

According to the first embodiment, the control portion 41 is configured to immediately stop the movement of the robot 100 (robot arm 2) based on detecting a position where the heat cutter blade 34 comes into contact with the glass substrate 301 of the substrate 300, and store a robot stop position where the robot 100 is stopped as the position where the heat cutter blade 34 comes into contact with the glass substrate 301 in the storage portion 42. Furthermore, the control portion 41 is configured to acquire a trimming position to trim the protruding portion 306 of the first adhesive sheet 302 and the second adhesive sheet 304 covering the glass substrate 301 protruding from the glass substrate 301 by the heat cutter blade 34 on the basis of the robot stop position stored in the storage portion 42. The control portion 41 is also configured to detect positions where the heat cutter blade 34 comes into contact with the glass substrate 301 on a plurality of sides (two sides 301a and 301d in the first embodiment) of the glass substrate 301 of the rectangular substrate 300, and calculate and acquire the trimming position on the basis of a plurality of detected positions where the heat cutter blade 34 comes into contact with the glass substrate 301. Substrates 300 (glass substrates 301) are sequentially conveyed by the conveyor 200, and the control portion 41 is configured to detect the positions where the heat cutter blade 34 comes into contact with the glass substrate 301 and acquire the trimming position on the basis of the positions where the heat cutter blade 34 comes into contact with the glass substrate 301 with respect to each of a plurality of glass substrates 301 sequentially conveyed.

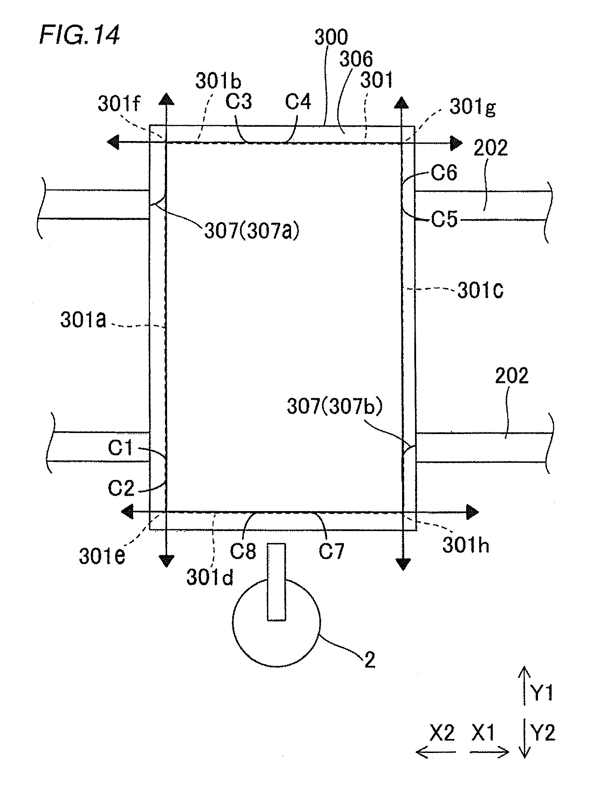

According to the first embodiment, the control portion 41 is configured to perform trimming by cutting the protruding portion 306 of the first adhesive sheet 302 and the second adhesive sheet 304 protruding from the glass substrate 301 toward corners (corners 301e, 301f, 301g, and 301h, see Fig. 11) from the sides (sides 301a, 301b, 301c, and 301d, see Fig. 11) of the rectangular glass substrate 301 by the heat cutter blade 34 when trimming the protruding portion 306 of the first adhesive sheet 302 and the second adhesive sheet 304 covering the glass substrate 301 of the substrate 300 protruding from the glass substrate 301 on the basis of the acquired trimming position by the heat cutter blade 34. More specifically, trimming is performed by cutting the protruding portion 306 from outer end portions (along arrow X1, arrow X2, arrow Y1, and arrow Y2) thereof toward the sides (sides 301a, 301b, 301c, and 301d) of the rectangular glass substrate 301, and thereafter toward the corners (corners 301e, 301f, 301g, and 301h) by the heat cutter blade 34, as shown by loci C1 to C8 in Fig. 14 described later.

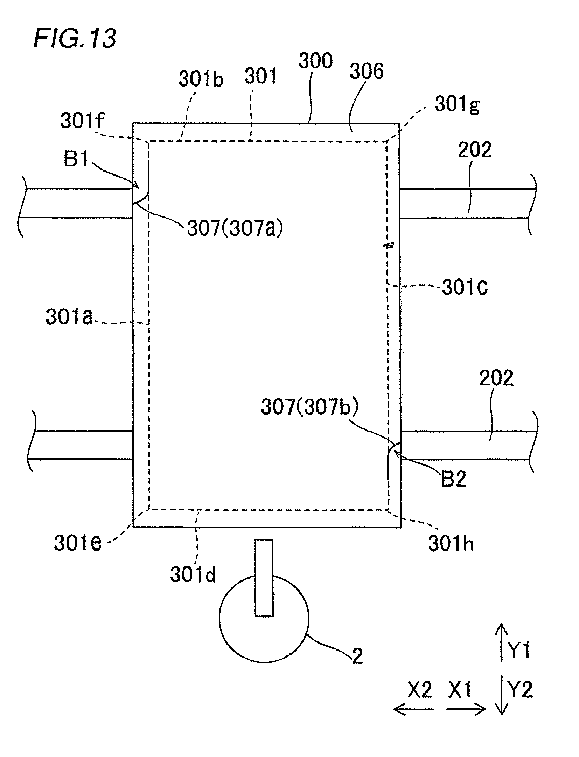

According to the first embodiment, the control portion 41 is configured to form slits 307 (see Fig. 13) on portions of the protruding portion 306 of the first adhesive sheet 302 and the second adhesive sheet 304, corresponding to the two rows of roller portions 202 of the conveyor 200 conveying the glass substrate 301 before trimming the protruding portion 306 of the first adhesive sheet 302 and the second adhesive sheet 304 covering the glass substrate 301 protruding from the glass substrate 301 on the basis of the acquired trimming position. More specifically, the control portion 41 is configured to form the slits 307 (307a, 307b) on two positions B1 and B2 of the protruding portion 306 located over the two rows of roller portions 202, as shown in Fig. 13.

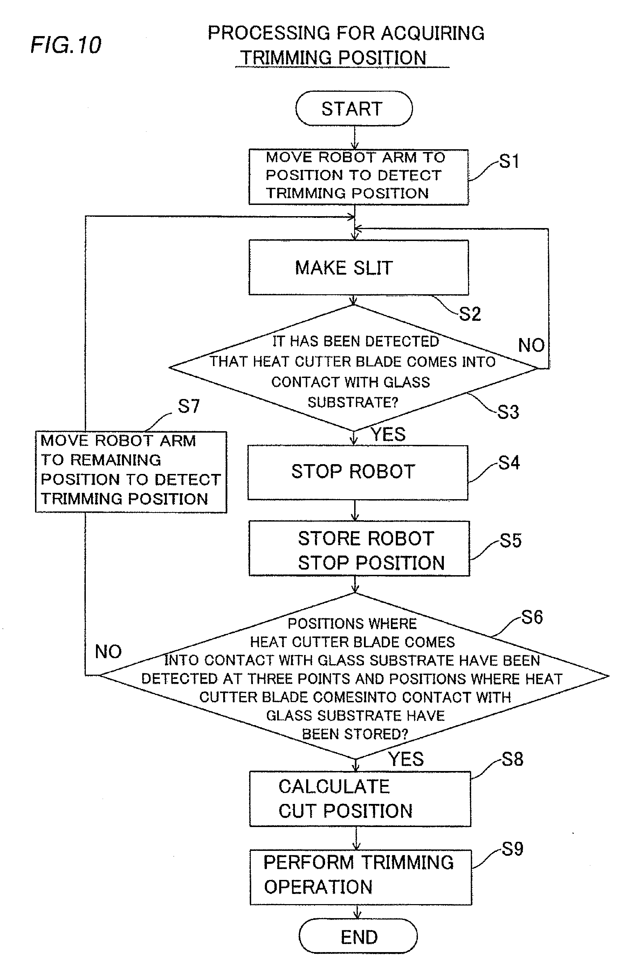

Next, the operation of the control portion 41 for acquiring the trimming position to trimming the protruding portion 306 by the heat cutter blade 34 according to the first embodiment is described with reference to Figs. 10 and 11.

As shown in a flowchart in Fig. 10, the control portion 41 moves the arm portions 2a, 2b, and 2c to move the end effector 3 to the vicinity (position to detect the trimming position) of the substrate 300 at a step S1.

Then, at a step S2, the control portion 41 moves the arm portions 2a, 2b, and 2c to make a slit, as shown in Fig. 11. More specifically, the protruding portion 306 of the first adhesive sheet 302 and the second adhesive sheet 304 is cut inward from an outer end portion (position corresponding to a point A1 on the side 301a of the glass substrate 301, for example) of the protruding portion 306 by the heat cutter blade 34 of the end effector 3 heated to a temperature of at least about 400°C and not more than about 500°C. At a step S3, the control portion 41 determines whether or not it has been detected that the heat cutter blade 34 comes into contact with the glass substrate 301, and repeats the step S2 until the heat cutter blade 34 comes into contact with the glass substrate 301. Then, the heat cutter blade 34 comes into contact with the glass substrate 301 of the substrate 300 (see Fig. 7) so that the heat cutter blade 34 (heat cutter body 33) is stopped, and the arm portion 2a (arm mounting portion 31) moves along arrow X1 with respect to the heat cutter blade 34 (heat cutter body 33). Thus, the detection section 35a of the contact detection portion 35 is put in the optical sensor 35b so that it is detected by output from the optical sensor 35b that the heat cutter blade 34 comes into contact with the glass substrate 301 of the substrate 300.

If determining that it has been detected that the heat cutter blade 34 comes into contact with the glass substrate 301 at the step S3, the control portion 41 immediately stops the movement of the robot 100 (robot arm 2) at a step S4. At a step S5, the control portion 41 stores the robot stop position where the robot 100 is stopped as the position where the heat cutter blade 34 comes into contact with the glass substrate 301 in the storage portion 42. As shown in Fig. 7, the heat cutter blade 34 comes into contact with the glass substrate 301, whereby the heat cutter blade 34 stops, and thereafter the arm portion 2a moves along arrow X1 with respect to the heat cutter blade 34. Consequently, the position where the heat cutter blade 34 comes into contact with the glass substrate 301 and the robot stop position where the robot 100 is stopped are slightly different from each other. However, a difference between the position where the heat cutter blade 34 comes into contact with the glass substrate 301 and the robot stop position where the robot 100 is stopped is very small, and hence the robot stop position where the robot 100 is stopped is regarded as the position where the heat cutter blade 34 comes into contact with the glass substrate 301.

Then, the control portion 41 advances to a step S6, and determines whether or not the positions where the heat cutter blade 34 comes into contact with the glass substrate 301 have been detected at the three points on the sides of the glass substrate 301, and whether or not the positions where the heat cutter blade 34 comes into contact with the glass substrate 301 have been stored in the storage portion 42. According to the first embodiment, the positions where the heat cutter blade 34 comes into contact with the glass substrate 301 are detected at three positions in total of two positions (points A1 and A2) on the side 301a of the glass substrate 301 along arrow X2 and one position (point A3) on the side 301d of the glass substrate 301 along arrow Y2, as shown in Fig. 11. If determining that the positions where the heat cutter blade 34 comes into contact with the glass substrate 301 have not been detected at the three points on the sides of the glass substrate 301, or the positions where the heat cutter blade 34 comes into contact with the glass substrate 301 have not been stored in the storage portion 42 at the step S6, the control portion 41 advances to a step S7, moves the robot arm 2 to the remaining position in which the detection of the position where the heat cutter blade 34 comes into contact with the glass substrate 301 has not yet been performed, and repeats the steps S2 to S6.

On the other hand, if determining that the positions where the heat cutter blade 34 comes into contact with the glass substrate 301 have been detected at the three points on the sides of the glass substrate 301, and the positions where the heat cutter blade 34 comes into contact with the glass substrate 301 have been stored in the storage portion 42 at the step S6, the control portion 41 advances to a step S8, and calculates a cut position of the protruding portion 306 of the first adhesive sheet 302 and the second adhesive sheet 304 covering the glass substrate 301 protruding from the glass substrate 301. More specifically, the coordinates of the corner 301e (see Fig. 11) of the glass substrate 301 are calculated from positions (coordinates of the robot) of the three points (points A1, A2, and A3) where the heat cutter blade 34 comes into contact with the glass substrate 301, stored in the storage portion 42. Furthermore, the positions of the sides 301a, 301b, 301c, and 301d of the glass substrate 301 are calculated as a cut position (trimming position) from the dimension (widths in the directions X and Y etc.) of the glass substrate 301 previously stored and the coordinates of the corner 301e. Then, the control portion 41 advances to a step S9, and starts to cut (trim) the protruding portion 306 on the basis of the calculated cut position. The aforementioned operation of the control portion 41 for acquiring the trimming position at the steps S1 to S9 is performed with respect to each of the substrates 300 (glass substrates 301) sequentially conveyed by the conveyor 200.

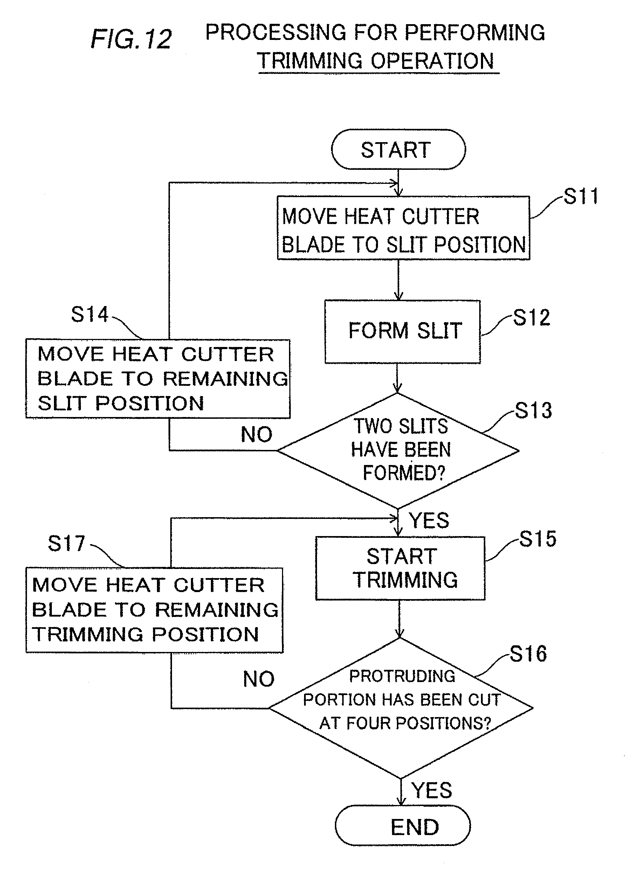

Next, the operation of the control portion 41 for trimming the protruding portion 306 on the basis of the acquired trimming position is described with reference to Figs. 12 to 16.

As shown in a flowchart in Fig. 12, the control portion 41 moves the arm portions 2a, 2b, and 2c to move the heat cutter blade 34 to a slit position at a step S11. Then, at a step S12, the slits 307 are formed on the portions of the protruding portion 306 of the first adhesive sheet 302 and the second adhesive sheet 304, corresponding to the roller portions 202 of the conveyor 200 conveying the glass substrate 301 before the protruding portion 306 is trimmed, as shown in Fig. 13. More specifically, the slits 307 (slits 307a and 307b) are formed on the two position B1 along arrow X2 and position B2 along arrow X1 of the protruding portion 306. The slit 307a is formed by cutting the protruding portion 306 from the outer end portion (along arrow X2) thereof toward the side 301a of the glass substrate 301, and thereafter toward the corner 301f. The slit 307a does not extend to the corner 301f but extends to the middle of the side 301a. Thereafter, the heat cutter blade 34 returns back along the same locus as that followed when the slit is formed to separate from the protruding portion 306. Similarly, the slit 307b is formed by cutting the protruding portion 306 from the outer end portion (along arrow X1) thereof toward the side 301c of the glass substrate 301, and thereafter toward the corner 301h.

At a step S13, the control portion 41 determines whether or not the two slits 307 have been formed. If determining that the two slits 307 have not been formed at the step S13, the control portion 41 moves the heat cutter blade 34 to the remaining slit position (step S14), and repeats the operation for forming the slit 307.

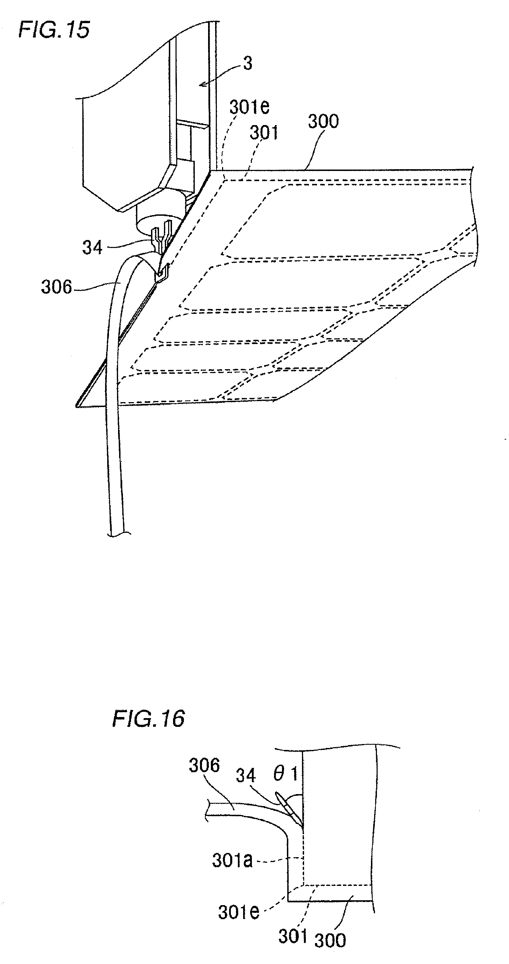

If determining that the two slits 307 have been formed at the step S13, the control portion 41 advances to a step S15, and starts trimming. Specifically, the protruding portion 306 is cut from the outer end portion (along arrow X2) thereof toward the side 301a of the glass substrate 301, and thereafter toward the corner 301e (locus C1) by the heat cutter blade 34, as shown in Figs. 14 and 15. As shown in Fig. 16, the protruding portion 306 is cut by the heat cutter blade 34 while the heat cutter blade 34 is inclined by a prescribed angle θ1 with respect to the side 301a of the glass substrate 301. Thereafter, the protruding portion 306 is cut from the outer end portion (along arrow X2) thereof toward the side 301a of the glass substrate 301, and thereafter toward the corner 301f (locus C2) by the heat cutter blade 34. Thus, a portion of the protruding portion 306 along arrow X2 is cut. The locus C1 and the locus C2 intersect with each other. The slit 307a is formed on a portion of the protruding portion 306 along arrow X2, and hence the cut protruding portion 306 is separated along arrow Y1 and arrow Y2. Thus, the cut protruding portion 306 is inhibited from being caught in the two rows of roller portions 202 while spanning the two rows of roller portions 202 of the conveyor 200, and the cut protruding portion 306 falls to a floor surface.

At a step S16, the control portion 41 determines whether or not the protruding portion 306 has been cut at four positions of the four sides (along arrow X1, arrow X2, arrow Y1, and arrow Y2) thereof. If determining that the protruding portion 306 has not been cut at the four positions of the four sides thereof, the control portion 41 moves the heat cutter blade 34 to the cut position (step S17), and repeats the operation for cutting the protruding portion 306. In other words, a portion of the protruding portion 306 along arrow Y1 is cut along the locus C3 (locus from the side 301b toward the corner 301g) and the locus C4 (locus from the side 301b toward the corner 301f) while a portion of the protruding portion 306 along arrow X1 is cut along the locus C5 (locus from the side 301c toward the corner 301g) and the locus C6 (locus from the side 301c toward the corner 301h). Furthermore, a portion of the protruding portion 306 along arrow Y2 is cut along the locus C7 (locus from the side 301d toward the corner 301e) and the locus C8 (locus from the side 301d toward the corner 301h).

If determining that the protruding portion 306 has been cut at the four positions of the four sides (along arrow X1, arrow X2, arrow Y1, and arrow Y2) thereof at the step S16, the control portion 41 terminates trimming of the protruding portion 306 by the heat cutter blade 34. In the first embodiment, the control portion 41 determines whether or not the two slits 307 have been formed or whether or not the protruding portion 306 has been cut at the four positions to start or terminate trimming, but trimming can be started or terminated by the automatic operation of the robot.

According to the first embodiment, as hereinabove described, the control portion 41 is provided to electrically detect the position where the heat cutter blade 34 comes into contact with the glass substrate 301 and acquire the trimming position on the basis of the position where the heat cutter blade 34 comes into contact with the glass substrate 301. Thus, the position where the heat cutter blade 34 comes into contact with the glass substrate 301 is detected without the influence of ambient light so that the trimming position can be accurately acquired, dissimilarly to a case where the position of the glass substrate 301 is detected on the basis of image data imaged by an imaging camera.

According to the first embodiment, as hereinabove described, the contact detection portion 35 detecting that the heat cutter blade 34 comes into contact with the glass substrate 301 is provided, and the control portion 41 is configured to detect the position where the heat cutter blade 34 comes into contact with the glass substrate 301 on the basis of the output from the contact detection portion 35. Thus, it can be easily detected on the basis of the output from the contact detection portion 35 that the heat cutter blade 34 comes into contact with the glass substrate 301.

According to the first embodiment, as hereinabove described, the control portion 41 is configured to immediately stop the movement of the heat cutter blade 34 based on detecting the position where the heat cutter blade 34 comes into contact with the glass substrate 301. Thus, the glass substrate 301 can be inhibited from being damaged by continuing the movement of the heat cutter blade 34 after the heat cutter blade 34 comes into contact with the glass substrate 301.

According to the first embodiment, as hereinabove described, the storage portion 42 storing the position where the heat cutter blade 34 comes into contact with the glass substrate 301 is provided, and the control portion 41 is configured to acquire the trimming position on the basis of the position where the heat cutter blade 34 comes into contact with the glass substrate 301, stored in the storage portion 42. Thus, the trimming position can be easily acquired on the basis of the position where the heat cutter blade 34 comes into contact with the glass substrate 301, stored in the storage portion 42.

According to the first embodiment, as hereinabove described, the control portion 41 is configured to immediately stop the movement of the robot 100 based on detecting the position where the heat cutter blade 34 comes into contact with the glass substrate 301, store the robot stop position where the robot 100 is stopped as the position where the heat cutter blade 34 comes into contact with the glass substrate 301 in the storage portion 42, and acquire the trimming position on the basis of the robot stop position stored in the storage portion 42. Thus, the robot stop position is regarded as the position where the heat cutter blade 34 comes into contact with the glass substrate 301 so that the trimming position can be quickly acquired, dissimilarly to a case where the position where the heat cutter blade 34 comes into contact with the glass substrate 301 is calculated on the basis of the robot stop position.

According to the first embodiment, as hereinabove described, the control portion 41 is configured to detect that the heat cutter blade 34 comes into contact with the glass substrate 301 by detecting that the robot arm 2 moves with respect to the heat cutter blade 34 when the heat cutter blade 34 comes into contact with the glass substrate 301 to stop. Thus, it can be reliably detected that the heat cutter blade 34 comes into contact with the glass substrate 301 on the basis of the movement of the robot arm 2 with respect to the heat cutter blade 34.

According to the first embodiment, as hereinabove described, the control portion 41 is configured to detect the positions where the heat cutter blade 34 comes into contact with the glass substrate 301 on the plurality of (two) sides 301a and 301d of the rectangular glass substrate 301, and calculate and acquire the trimming position on the basis of the plurality of detected positions where the heat cutter blade 34 comes into contact with the glass substrate 301. Thus, the positions where the heat cutter blade 34 comes into contact with the glass substrate 301 are detected on the plurality of sides 301a and 301d, and hence the trimming position can be easily acquired employing the information of the detected positions where the heat cutter blade 34 comes into contact with the glass substrate 301 on the sides 301a and 301d and the information of the dimension of the glass substrate 301.

According to the first embodiment, as hereinabove described, the control portion 41 is configured to detect the positions where the heat cutter blade 34 comes into contact with the glass substrate 301 and acquire the trimming position on the basis of the positions where the heat cutter blade 34 comes into contact with the glass substrate 301 with respect to each of the plurality of glass substrates 301. Thus, the trimming position can be accurately acquired with respect to each of the glass substrates 301 even if the positions and dimensions of the glass substrates 301 are different from each other.

According to the first embodiment, as hereinabove described, the control portion 41 is configured to perform trimming by cutting the first adhesive sheet 302 and the second adhesive sheet 304 toward the corners from the sides of the rectangular glass substrate 301 by the heat cutter blade 34 when trimming the protruding portion 306 of the first adhesive sheet 302 and the second adhesive sheet 304 covering the glass substrate 301 protruding from the glass substrate 301 on the basis of the acquired trimming position by the heat cutter blade 34. Thus, the damage of the heat cutter blade 34 resulting from collision thereof against the corners of the glass substrate 301 can be inhibited, dissimilarly to a case where the protruding portion 306 is cut toward the sides from the corners of the glass substrate 301 by the heat cutter blade 34.

According to the first embodiment, as hereinabove described, the control portion 41 is configured to form the slits 307 on the portions of the protruding portion 306 of the first adhesive sheet 302 and the second adhesive sheet 304, corresponding to the roller portions 202 conveying the glass substrate 301, on which the glass substrate 301 is placed, before trimming the protruding portion 306 of the first adhesive sheet 302 and the second adhesive sheet 304 covering the glass substrate 301 protruding from the glass substrate 301 on the basis of the acquired trimming position. Thus, the cut protruding portion 306 is separated on one side of each of the slits 307 and the other side and falls, and hence the cut protruding portion 306 can be inhibited from being caught in the roller portions 202.

According to the first embodiment, as hereinabove described, the protruding portion 306 of the first adhesive sheet 302 and the second adhesive sheet 304 is cut by the heat cutter blade 34 having the tip generating heat. Thus, the protruding portion 306 can be cut with simple structure, dissimilarly to a case where the protruding portion 306 is cut by laser or ultrasound. Furthermore, the damage or aging degradation of the glass substrate 301 resulting from the vibration of a rotary knife can be inhibited, dissimilarly to a case where the protruding portion 306 is cut by the rotary knife.

According to the first embodiment, as hereinabove described, the heat cutter blade 34 is substantially U-shaped, and configured to be capable of cutting the protruding portion 306 of the first adhesive sheet 302 and the second adhesive sheet 304 covering the glass substrate 301 protruding from the glass substrate 301 by both of the end portion 34a of the substantially U-shaped heat cutter blade 34 on one side and the end portion 34b of the substantially U-shaped heat cutter blade 34 on another side. Thus, the lifetime of the heat cutter blade 34 can be increased, dissimilarly to a case where the protruding portion 306 is cut by only the end portion of the heat cutter blade 34 on one side.

### (Second Embodiment)

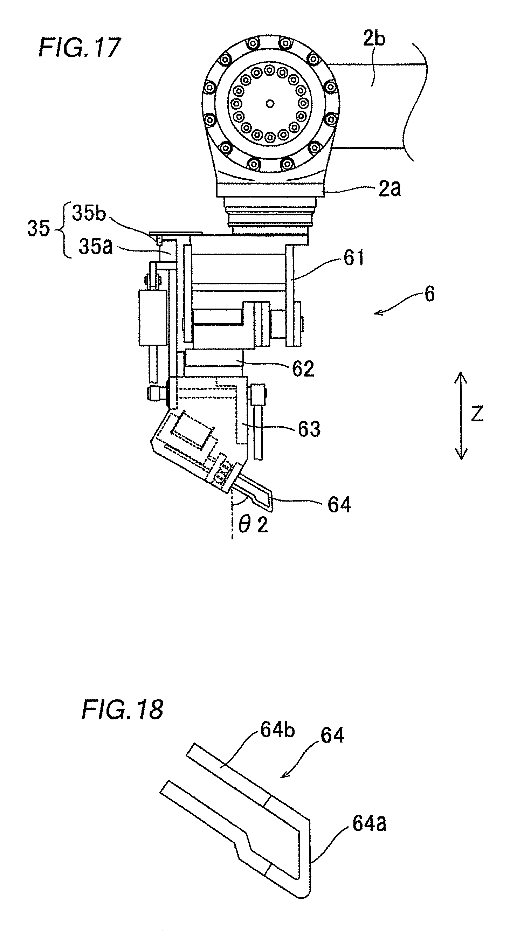

Next, an end effector 6 according to a second embodiment is described with reference to Figs. 17 and 18. In this second embodiment, a heat cutter blade 64 in the form of a cutter blade is included in the end effector 6, dissimilarly to the aforementioned first embodiment in which the substantially U-shaped heat cutter blade 34 is included in the end effector 3. The heat cutter blade 64 is an example of the "tool".

As shown in Fig. 17, the end effector 6 according to the second embodiment includes an arm mounting portion 61, an air slide table 62, a heat cutter body 63, and the heat cutter blade 64. The arm mounting portion 61 is fixedly mounted on an arm portion 2a, and arranged above the air slide table 62. The heat cutter body 63 is arranged below the air slide table 62. The heat cutter blade 64 is mounted on the forward end of the heat cutter body 63 along a direction interesting with a vertical direction (direction Z) by a prescribed angle θ2.

As shown in Fig. 18, the heat cutter blade 64 is in the form of a cutter blade in plan view, and configured to be capable of cutting a protruding portion of a first adhesive sheet 302 and a second adhesive sheet 304 covering a glass substrate 301 of a substrate 300 protruding from the glass substrate 301 by a tip portion 64a of the heat cutter blade 64 in the form of a cutter blade. Specifically, a portion 64b of the heat cutter blade 64 on the side of the heat cutter body 63 is made of copper alloy, for example, in the form of a bar. The tip portion 64a on the tip of the heat cutter blade 64 is in the form of a cutter blade. The tip portion 64a of the heat cutter blade 64 is made of Nichrome, for example, and can generate heat at a temperature of at least about 400°C and not more than about 500°C. The tip portion 64a of the heat cutter blade 64 is so configured that the thickness thereof is gradually decreased toward the tip thereof.

The remaining structure and effects of the second embodiment are similar to those of the aforementioned first embodiment.

It should be understood by those skilled in the art that various modifications, combinations, sub-combinations, and alterations may occur depending on design requirements and other factors insofar as they are within the scope of the appended claims or the equivalents thereof.

For example, while the control portion is configured to acquire the trimming position to cut the protruding portion of the first adhesive sheet and the second adhesive sheet protruding from the glass substrate on the substrate in each of the aforementioned first and second embodiments, the control portion may alternatively be configured to acquire a trimming portion to cut a portion of a sheet member protruding from a semiconductor substrate, for example, other than the substrate. Furthermore, the control portion may alternatively be configured to acquire a processing position other than the cut (trimming) position.

While the contact detection portion including the optical sensor and the detection section electrically detects that the heat cutter blade comes into contact with the glass substrate of the substrate in each of the aforementioned first and second embodiments, a mechanical contact detection portion switched on when the heat cutter blade comes into contact (collides) with the glass substrate may alternatively detect that the heat cutter blade comes into contact with the glass substrate. Furthermore, a contact detection portion may alternatively be configured to electrically detect that the heat cutter blade comes into contact with the glass substrate by detecting increases in the current values of the servomotors due to inhibition of movement of the heat cutter blade resulting from contact of the heat cutter blade with the glass substrate.

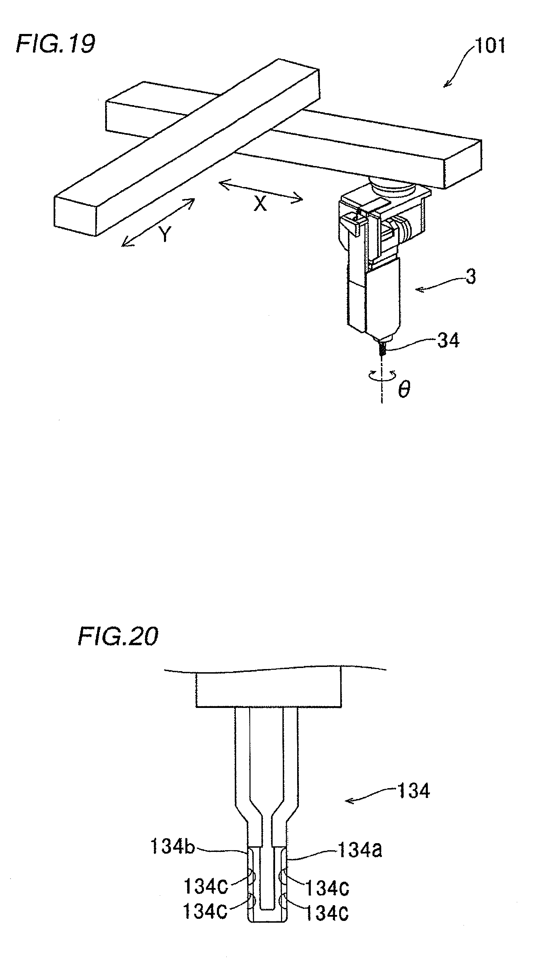

While the vertical articulated robot having the heat cutter blade is applied as the example of the processing apparatus in each of the aforementioned first and second embodiments, a processing apparatus 101 movable (rotatable) in directions X, Y, and θ having an end effector 3 (heat cutter blade 34), as shown in Fig. 19 may alternatively be applied as the example of the processing apparatus. Furthermore, a SCARA robot, for example, other than the vertical articulated robot having the heat cutter blade may alternatively be applied as the example of the processing apparatus.

While the trimming position is calculated on the basis of the contact positions detected by bringing the heat cutter blade into contact with the two sides of the glass substrate in each of the aforementioned first and second embodiments, the trimming position may alternatively be calculated on the basis of contact positions detected by bringing the heat cutter blade into contact with the three or more sides of the glass substrate.

While the trimming position is calculated on the basis of the contact positions detected by bringing the heat cutter blade into contact with the three points of the glass substrate in each of the aforementioned first and second embodiments, the trimming position may alternatively be calculated on the basis of contact positions detected by bringing the heat cutter blade into contact with one, two, or at least four points of the glass substrate.

While the trimming position is acquired with respect to each of the plurality of substrates (glass substrates) by bringing the heat cutter blade into contact with each of the plurality of substrates (glass substrates) in each of the aforementioned first and second embodiments, the trimming position may alternatively be acquired by bringing the heat cutter blade into contact with one of the plurality of substrates (glass substrates), and trimming may alternatively be performed with respect to the other of the plurality of substrates (glass substrates) on the basis of this trimming position.

While the two slits are formed on the protruding portion protruding from the glass substrate in advance of trimming in each of the aforementioned first and second embodiments, one or at least three slits may alternatively be formed. In other words, the number of formed slits may depend on the number of conveying portions (roller portions).

While the protruding portion of the first adhesive sheet and the second adhesive sheet protruding from the glass substrate is cut by heat of the heat cutter blade in each of the aforementioned first and second embodiments, the protruding portion may alternatively be cut by a tool such as a cutter blade other than the heat cutter blade.

With respect to the substantially U-shaped heat cutter blade according to the aforementioned first embodiment, recess portions 134c may alternatively be formed in each of an end portion 134a of a substantially U-shaped heat cutter blade 134 on one side and an end portion 134b of the substantially U-shaped heat cutter blade 134 on another side, as shown in Fig. 20, for example. Thus, a protruding portion 306 of a first adhesive sheet 302 and a second adhesive sheet 304 cut by the heat cutter blade 134 can be inhibited from adhering to the heat cutter blade 134. The heat cutter blade 134 is an example of the "tool".

## Claims

1. A processing apparatus (100) comprising:
a tool (34, 64, 134) processing a protruding portion (306) of a sheet member (302, 304) covering a base substrate (301) protruding from the base substrate; and
a control portion (41) mechanically or electrically detecting a position where the tool comes into contact with the base substrate and acquiring a processing position based on the position where the tool comes into contact with the base substrate.

2. The processing apparatus according to claim 1, further comprising a contact detection portion (35) mechanically or electrically detecting that the tool comes into contact with the base substrate, wherein
the control portion is configured to detect the position where the tool comes into contact with the base substrate based on output from the contact detection portion.

3. The processing apparatus according to claim 1 or 2, wherein
the control portion is configured to immediately stop movement of the tool based on detecting the position where the tool comes into contact with the base substrate.

4. The processing apparatus according to any one of claims 1 to 3, further comprising a storage portion (42) storing the position where the tool comes into contact with the base substrate, wherein
the control portion is configured to acquire the processing position based on the position where the tool comes into contact with the base substrate stored in the storage portion.

5. The processing apparatus according to claim 4, further comprising an articulated robot (100) having the tool, wherein
the control portion is configured to immediately stop movement of the articulated robot based on detecting the position where the tool comes into contact with the base substrate, store a robot stop position where the articulated robot is stopped as the position where the tool comes into contact with the base substrate in the storage portion, and acquire the processing position based on the robot stop position stored in the storage portion.

6. The processing apparatus according to claim 5, wherein
the articulated robot includes a robot arm (2) mounted with the tool, and
the control portion is configured to detect that the tool comes into contact with the base substrate by detecting that the robot arm moves with respect to the tool when the tool comes into contact with the base substrate to stop.

7. The processing apparatus according to any one of claims 1 to 6, wherein
the control portion is configured to detect positions where the tool comes into contact with the base substrate on a plurality of sides (301a, 301d) of the base substrate having a rectangular shape, and calculate and acquire the processing position based on a plurality of the detected positions where the tool comes into contact with the base substrate.

8. The processing apparatus according to any one of claims 1 to 7, wherein
a plurality of base substrates are arranged, and
the control portion is configured to detect the position where the tool comes into contact with the base substrate and acquire the processing position based on the position where the tool comes into contact with the base substrate with respect to each of the plurality of base substrates.

9. The processing apparatus according to any one of claims 1 to 8, wherein
the control portion is configured to detect the position where the tool comes into contact with the base substrate and acquire a trimming position to trim the protruding portion of the sheet member covering the base substrate protruding from the base substrate by the tool based on the position where the tool comes into contact with the base substrate.

10. A processing method for processing a protruding portion (306) of a sheet member (302, 304) covering a base substrate (301) protruding from the base substrate along a processing position by a tool (34, 64, 134), comprising:
mechanically or electrically detecting a position where the tool comes into contact with the base substrate; and
acquiring the processing position based on the position where the tool comes into contact with the base substrate.
